# EUROPÄISCHE PATENTANMELDUNG

(11) **EP 1 026 076 A1**
(43) Veröffentlichungstag der Anmeldung: **09.08.2000**
(21) Anmeldenummer: 99101624.7
(22) Anmeldetag: 03.02.1999
(51) Int. Cl.: B65B 3/32, G01F 11/02

(54) **Füllmaschine für Thermoplastbecher**

(71) Anmelder: Eggers, Thies, D-51789 Lindlar (DE)
(72) Erfinder: Eggers, Thies, D-51789 Lindlar (DE)
(74) Vertreter: Hassler, Werner, Dr.

(57) **Zusammenfassung**

Eine Füllmaschine für Thermoplastbecher, mit einer taktweise arbeitenden Transportsirecke, die eine Becherfolienbahn mit tiefgezogenen Bechern von einer Tiefziehstation übernimmt, wobei zur gleichzeitigen Füllung einer Partie von Bechern für jeden Becher der Partie eine Fülleinheit mit einem Füllzylinder und einem Füllrohr für pastöses Füllgut vorgesehen ist, wobei der Füllzylinder produktseitig einen Füllkolben enthält. Das technische Problem ist die Bereitstellung einer volumenmäßig leicht einstellbaren, einer ohne Saugwirkung arbeitenden und einer leicht reinigungsfähigen und sterilisierbaren Füllmaschine. Antriebsseitig ist mit dem Füllkolben (24) durch eine Kolbenstange (40) ein Luftkolben (31) verbunden, und der Füllzylinder (23) ist über dem Luftkolben (31) durch einen Zylinderkopf (32) abgeschlossen ist, der über ein Ausgleichsrohr (35) an einen Druckausgleichsbehälter angeschlossen ist.

## Beschreibung

Die Erfindung betrifft eine Füllmaschine für Thermoplastbecher nach dem Oberbegriff des Patent-anspruchs 1. Eine derartige Füllmaschine ist durch die DE 40 25 714 A 1 bekannt.

Anwendungsgebiet der Erfindung ist die Online-Abfüllung von Thermoplastbechern mit pastösem Füllgut. Unter pastösem Füllgut ist auch flüssiges Füllgut wie eine Getränkezubereitung zu verstehen. Als Füllgut kommen Lebensmittelzubereitungcn wie Quark oder andere Milchprodukte, Pudding. Konfitüre, Getränke oder dergleichen infrage.

Aufgabe der Erfindung ist die Bereitstellung einer volumenmäßig leicht einstellbaren, einer ohne Saugwirkung arbeitenden und einer leicht reinigungsfähigen und sterilfähigen Füllmaschine.

Diese Aufgabe wird nach der Erfindung für eine Füllmaschine der oben genannten Gattung durch die kennzeichnenden Merkmale des Anspruchs 1 gelöst.

Die Erfindung unterscheidet sich insofern vom Stand der Technik, als das Füllgut in den Füllzylinder eingepreßt und durch den Druck im Druckausgleichbehälter aus dem Füllzylinder ausgedrückt wird, wobei der Druck im Druckausgleichbehälter beim Einpressen des Füllgutes nur gerinfiigig erhöht wird. Der Druck hängt von der Viskosität des Füllgutes ab. Ein besonderer Antrieb für den Füllkolben ist nicht erforderlich. Zum Füllen des Füllzylinders mit Füllgut ist auch keine Unterdruckwirkung erforderlich. Der von dem Füllkolben getrennte Luftkolben verhindert ein Eindringen des Füllgutes in den Ausgleichraum, so daß derselbe leicht steril und rein gehalten werden kann. Die Anzahl der Füllkolben läßt sich der jeweils zu füllenden Becherpartie anpassen.

Der Reinigungsvorgang wird dadurch erleichtert, daß der Füllzylinder als Stufenzylinder mit einem füllseitigen Abschnitt kleinsten Durchmessers für den Füllkolben und einem antriebseitigen Abschnitt größeren Durchmessers für den Luftkolben ausgebildet ist.

Das ungehinderte Fließen des Reinigungsmittels wird dadurch erleichtert, daß an den Abschnitt des Füllzylinders ein weiterer Abschnitt größten Durchmessers anschließt, der den Luftkolben während der Reinigungsphase aufnimmt. Zum Reinigen wird der Füllkoben bis zum Anschlag verstellt, so daß das Reinigungsmittel ungehindert strömen kann.

Die Einstellung des Füllvolumens wird dadurch ennöglicht, daß antriebsseitig in der Achse des Füllzylinders eine Spindel angeordnet ist, auf der zur Einstellung des Füllvolumens ein Anschlagring für die Kolbenstange verstellbar ist. Jeder Füllkolben kann somit von einem Volumen 0 bis zum Höchstwert stufenlos eingestellt werden. Dieses ist auch für Vordosierung oder andere Zusatzdosierungen wichtig.

Man erreicht eine endseitige Führung der Spindel dadurch, daß die Kolbenstange hohl ausgebildet und über die Spindel verschiebbar ist.

Das Füllgut wird dadurch besser behandelt, daß die Füllkolben mit einer Dichtlippe an der Zylinderwand anliegt. Der Füllkoben ist trockenlaufsicher. Am Kolben kann sich kein Füllgut festsetzen.

Die Steuerung der Füllung erfolgt dadurch, daß die in die Produktkammer des Füllzylinders führende Produktleitung durch einen Schließkolben absperrbar ist.

Das Füllen der Thermoplastbecher erfolgt dadurch, daß am Ausgang der Produktkammer ein zum Füllrohr führendes Füllventil vorgesehen ist.

An eine Gruppenleitung kann man Füllzylinder in beliebiger Anzahl anschließen. In der Gruppenleitung wird das Füllgut unter Druck zugeführt. Der Druck im Druckausgleichbehälter beträgt etwa 0.5 bar. Dieser Druck ist der Viskosität des Füllgutes angepaßt. Durch das Einpressen des Füllgutes in den Füllzylinder ändert sich der Druck im Druckausgleichbehälter nur geringfügig um etwa 0,05 bar. Während des Betriebes treten nur vemachlässigbare Leckverluste auf, so daß der Druckluftbedarf ebenfalls vernachlässigbar ist. Der Füllzylinder kann zur Vordosierung und zur Hauptdosierung eingesetzt werden.

Ein Ausführungsbeispiel wird anhand der Zeichnungen erläutert, in denen darstellen:
Fig. 1 eine schematische Ansicht einer die Füllmaschiene einschließenden Abfüllanlage und
Fig. 2 eine schematische Schnittdarstellung einer Fülleinheit.

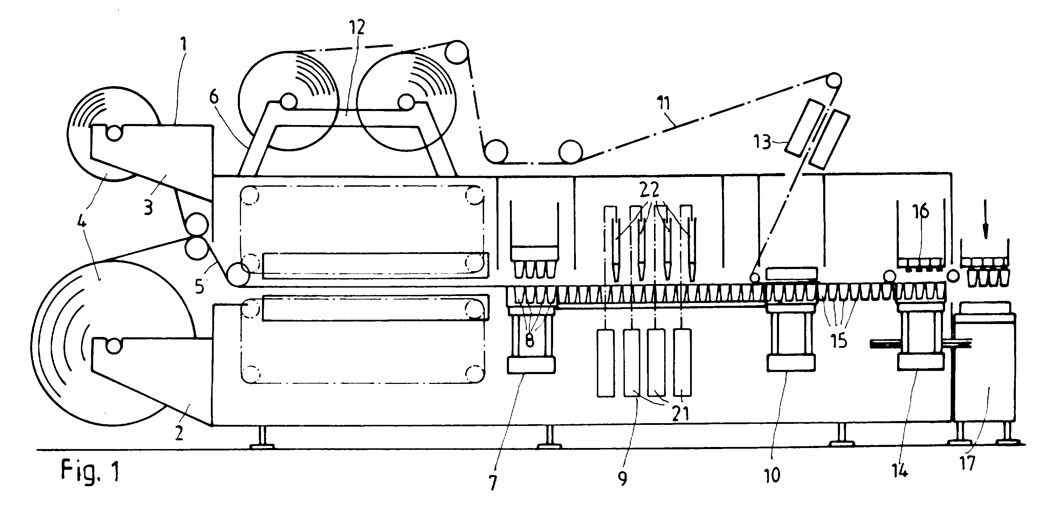

Fig. 1 ist eine schematische Gesamtansicht einer Abfüllanlage. Diese umfaßt folgende wesentllichen Bearbeitungsstationen:
eine Wechselabwicklung 1 mit zwei Abwickelaufnahmen 2, 3 für je einen Wickel 4 einer Thermoplastfolie 5, wobei die Wickel 4 wechselweise abgewickelt werden;
eine durchgehende Transportstrecke mit Transportwalzen, Haltern und Greifern, die nicht dargestellt und näher erläutert sind. Die Transportstrecke ist für eine taktweise Bewegung eingerichtet, so daß jeweils eine Partie von Thermoplastbechern in eine Arbeitsstation bewegt werden;
eine Heizstation 6 zum Autheizen der Thermoplastfolie 5 auf die Tiefziehtemperatur;
eine Tiefziehstation 7 zur Formung einer Partie von Thermoplastbechern 8;
eine Füllmaschine 9 zum Befüllen der Thennoplastbecher 8 mit pastösem Füllgut. Die Füllmaschine 9 ist zur Füllung einer Partie von Thermoplastbechern mit in Gruppen angeordneten Fülleinheiten 21 mit je einem Füllrohr 22 ausgestattet;
eine Siegelstation 10, der eine Deckeliolienbahn 11 von einer Wechselabwicklung 12 über eine Heizstation 13 zugeführt wird. Die Siegelstation dient zur Heißsiegelung der Deckelfolie auf die gefüllten Thermoplastbecher 15;
eine Stanzstation 14 zur Trennung und Vereinzelung der gesiegelten Thermoplastbecher 15 mit einem Austraggreifer 16, der die getrennten Thermoplastbecher 20 partieweise aufnimmt und in
eine Packstation 17 befördert, wo die Thermoplastbecher 20 in Steigen, Kartons, Paletten oder andere Transportbehälter eingebracht werden. Die Stationen für die Endverpackung sind nicht dargestellt.

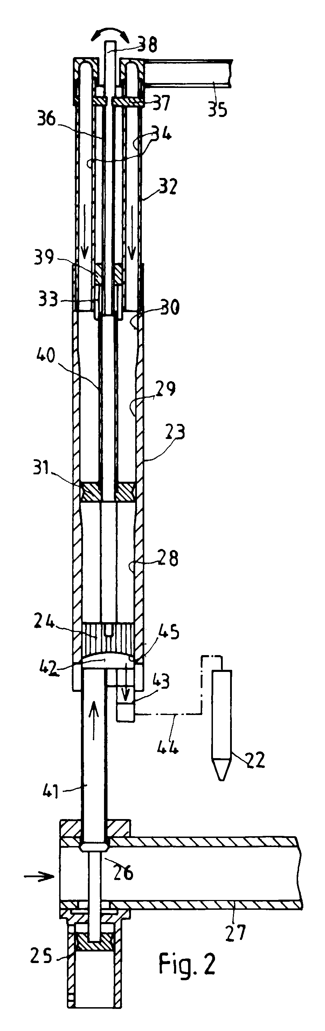

Fig. 2 zeigt eine Fülleinheit 21 mit einem Füllzylinder 23, der einen Füllkolben 24 aufnimmt. dessen Hub zur Dosierung des Füllgutes einstellbar ist. Der Füllkolben 23 liegt mit einer Dichtlippe 45 an der Zylinderinnenand an, so daß er trockenlaufsicher arbeitet. Eine Verschmutzung des Füllkolbens durch das Füllgut ist dadurch weitgehend ausgeschlossen. Der Füllzylinder 23 ist über ein Ventil 25 mit einem Schließkolben 26 an eine Gruppenleitung 27 angeschlossen, die eine Gruppe von Fülleinheiten versorgt.

Der Füllzylinder 23 ist ein Stufenzylinder mit einem engeren Abschnitt 28 für den Füllkolben 24, einen über eine Außenstufe abgesetzten erweiterten Abschnitt 29 für einen Luftkolben 31 und einen nochmals über eine Außenstufe abgesetzten Abschnitt 30. Der Füllzylinder 23 ist durch einen Zylinderkopf 32 abgeschlossen, der zwei Luftleitungen 34 aufnimmt, die über ein Ausgleichsrohr 35 an einen nicht dargestellten Druckausgleichbehälter oder ein Druckausgleichrohr angeschlossen sind.

In der Achse des Innenrohrs 33 befindet sich eine in einer Platte 37 in axialer Richtung positionierte Spindel 36, die einen kopfseitigen Antrichsflansch 38 hat für eine Verstellung von Hand, mittels eines Werkzeugs oder durch einen Stellantrieb. Der Schraubengang der Spindel 36 greift in das Schraubengewinde eines Anschlagrings 39 ein, der zwischen den Luftleitungen 34 verdrehungssicher geführt ist. Der Anschlagring 39 dient als Anschlag für eine Kolbenstange 40 beziehungsweise eine Abschlußmuffe 33 der Kolbenstange 40, die den Füllkolben 24 und den Luftkolben 31 trägt. Die Kolbenstange 40 ist mindestens im Kopfbereich hohl, damit die Spindel 36 in die Kolbenstange 40 eintauchen kann.

Von der Gruppenleitung führt über dem Schließkolben 26 eine Produktleitung 41 in eine Produktkammer 42 des Füllzylinders 23. Die Produktkammer 42 ist andererseits über ein Füllventil 43 und eine Füllleitung 44 mit einem Füllrohr 22 verbunden.

Die Arbeitsweise der Fülleinheit ist wie folgt: In dem Druckausgleichbehälter herrscht normalerweise ein Druck von etwa 0,5 bar, der entsprechend der Viskosität des Füllgutes eingestellt ist. Zur Füllung des Füllzylinders 23 wird der Schließkolben 26 geöffnet, so daß das in der Gruppenleitung 27 unter Druck befindliche Füllgut in die Produktkammer 42 eintritt. Der Füllkolben 24 wird zurückgedrängt. Dabei wird der Druck durch Kompression der Luft in dem Druckausgleichsbehälter leicht, um etwa 0,05 bar, auf 0,55 bar erhöht. Sobald das eingestellte Füllvolumen erreicht ist, stößt die Abschlußmuffe 33 der Kolbenstange 40 an den Anschlagring 39 und erregt einen nicht dargestellten Sensor. Durch das Sensorsignal wird der Schließkolben 26 geschlossen.

Nachdem die Partie der Thermoplastbecher in der Füllstation positioniert ist, wird ein Signal zur Öffnung des Füllventils 43 erzeugt. Durch den Druck im Druckausgleichbehälter wird das Füllgut jeweils über das Füllrohr 22 in die Thermoplastbecher gefüllt.

Zur Reinigung der Fülleinheit wird der Anschlagring 39 der Spindel 36 bis an die Platte 37 bewegt, so daß die Kolbenstange 40 entsprechend weit zurückgeschoben werden kann. Diese Bewegung der Kolbenstange 40 erfolgt unter dem Druck des Reingungsmittels auf den Füllkolben 24. Wenn die Kolbenstange 40 an dem an der Platte 37 anliegenden Anschlagring 39 anstößt, befinden sich der Füllkolben 24 in dem Abschnitt 23 und der Luftkolben 31 in dem Abschnitt 30, so daß zwischen dem Kolbenmantel und der Zylinderinnenwand jeweils ein Spalt für den Durchfluß des Reinigungsmittels freibleibt. Die Durckausgleichrohre dienen als Leitungen für das Reinigungsmittel. Nach Abschluß der Reinigung wird der Anschlagring 39 der Spindel 36 jeweils wieder auf das gewünschte Füllvolumen eingestellt.

## Patentansprüche

1. Füllmaschine für Thermoplastbecher, mit einer taktweise arbeitenden Transportstrecke, die eine Becherfolienbahn mit tiefgezogenen Bechern von einer Tiefziehstation übernimmt, wobei zur gleichzeitigen Füllung einer Partie von Bechern für jeden Becher der Partie eine Fülleinheit mit einem Füllzylinder und einem Füllrohr für pastöses Füllgut vorgesehen ist, wobei der Füllzylinder produktseitig einen Füllkolben enthält, dadurch gekennzeichnet, daß antriebsseitig mit dem Füllkolben (24) durch eine Kolbenstange (40) ein Luftkolben (31) verbunden ist und daß der Füllzylinder (23) über dem Luftkolben (31) durch einen Zylinderkopf (32) abgeschlossen ist, der über ein Ausgleichsrohr (35) an einen Druckausgleichsbehälter angeschlossen ist.

2. Füllmaschine nach Anspruch 1, dadurch gekennzeichnet, daß der Füllzylinder (23) als Stufenzylinder mit einem füllseitigen Abschnitt (28) kleinsten Durchmessers für den Füllkolben (24) und einem antriebseitigen Abschnitt (29) größeren Durchmessers für den Luftkolben (31) ausgebildet ist.

3. Füllmäschine nach Anspruch 2, dadurch gekennzeichnet, daß an den Abschnitt (29) des Füllzylinders (23) ein weiterer Abschnitt (30) größten Durchmessers anschließt, der den Luftkolben (31) während der Reinigungsphase aufnimmt.

4. Füllmaschine nach einem der Ansprüche 1 bis 3, dadurch gekennzeichnet, daß antriebssseitig in der Achse des Füllzylinders (23) eine Spindel (36) angeordnet ist, auf der zur Einstellung des Füllvolumens ein Anschlagring (39) für die Kolbenstange (40) verstellbar ist.

5. Füllmaschine nach Anspruch 4, dadurch gekennzeichnet, daß die Kolbenstange (40) hohl ausgebildet und über die Spindel (36) verschiebbar ist.

6. Füllmaschine nach einem der Ansprüche 1 bis 5, dadurch gekennzeichnet, daß der Füllkolben (24) mit einer Dichtlippe (45) an der Innenwand des Füllzylinders (23) anliegt.

7. Füllmaschine nach einem der Ansprüche 1 bis 6 mit einer in eine Produktkammer des Füllzylinders führenden absperrbaren Produktleitung, dadurch gekennzeichnet, daß die Produktleitung (41) durch einen Schließkolben (26) absperrbar ist.

8. Füllmaschine nach einem der Ansprüche 1 bis 7, dadurch gekennzeichnet, daß am Ausgang der Produktkammer (42) in einer zum Füllrohr (22) führenden Fülleitung (44) ein Füllventil (43) vorgesehen ist.
